# EUROPEAN PATENT APPLICATION

(11) **EP 3 078 452 A1**
(43) Date of publication of application: **12.10.2016**
(21) Application number: 15380011.5
(22) Date of filing: 09.04.2015
(51) Int. Cl.: B23Q 15/12, B23Q 17/09, G05B 19/404

(54) **SYSTEM FOR SUPPRESSING CHATTER IN A MACHINE TOOL**

(71) Applicant: Ideko, S.Coop., 20870 Elgoibar Guipuzcoa (ES)
(72) Inventor: Beudaert, Xavier, 20870 Elgoibar (Guipuzcoa) (ES); Barrios Azconaga, Asier, 20870 Elgoibar (Guipuzcoa) (ES); Muñoa Gorostidi, Jokin, 20870 Elgoibar (Guipuzcoa) (ES)
(74) Representative: Cabinet Plasseraud

(57) **Abstract**

The present invention relates to a system for suppressing chatter in a machine tool, occurring in the ram (4) of the machine tool during machining, comprising a first drive configured for moving the ram (4) in the horizontal direction with respect to the axis (x), a second drive configured for moving the ram (4) in the vertical direction with respect to the axis (y), a first movement detection means configured for measuring vibration of the ram (4) in the horizontal direction of the axis (x), a second movement detection means configured for measuring vibration of the ram (4) in the vertical direction of the axis (y), and control means configured for commanding the first drive and generating a movement according to the vibration of the ram (4) in the horizontal direction of the axis (x), and configured for commanding the second drive and generating a movement according to the vibration of the ram (4) in the vertical direction of the axis (y).

## Description

### Field of the Art

The present invention relates to suppressing chatter occurring during machining processes in machine tools incorporating a cantilever-type moving element bearing the working tool, such as the ram of a milling machine, boring machine, vertical lathe, or machining center.

### State of the Art

Chatter is a type of self-induced vibration characteristic of the cutting processes, where the edge of the cutting tool must pass over a surface that has previously been machined. When the tool starts machining an area of the part, it does not leave a smooth surface, but rather creates a corrugated surface due to vibration of different structural parts of the machine or of the part.

Therefore, when a previously machined area is being machined, the tool works on a variable corrugated surface that was generated in the preceding pass and it affects the shaving thickness. This thickness is also altered by the vibration the tool experiences at the instant of cutting. Therefore, the vibration the machine has in the current instant and the vibration it had in the preceding period affect the shaving thickness, and therefore the cutting force, because said force is proportional to the shaving thickness. A loop is thereby generated in which the cutting force is a function of the current and the preceding vibration of the machine. For certain cutting conditions, this loop increases the amplitude of the vibration and the cutting force in an unstable manner, generating the occurrence of chatter.

The chatter limits productivity and can furthermore have negative consequences such as:
- Geometric imprecisions in the part: The obtained surface finish is not tolerable and the reduction of the dimensional precision on the machined part is high.
- Overstressing of the cutting tool: Increase in wear, even being able to break the tool.
- Structural damage of machine: Play or breaking of internal rotational mechanical elements of the machine and reduction of the lifetime of components.

Chatter is particularly problematic in large-sized machine tools equipped with cantilever-type moving elements, such as milling machines, boring machines, vertical lathes, or machining centers incorporating a ram. These machine tools have a strongly variable dynamic response according to the position in which the ram is located, such that the distribution of masses of the machine and both the static and dynamic rigidity vary as the ram moves. That being the case, when the tool interacts with the part during the cutting process, the machine behaves very differently according to the position of the ram, causing strong variations in the cutting capacity of the machine.

To suppress chatter occurring during machining, the use of active and passive dampers is known. Passive dampers consist of a mass that is attached to the structure to be damped by means of a damped flexible attachment. The natural frequency of the passive damper is tuned so that it coincides with the natural frequency of the structure to be damped. However, these passive dampers become less effective when the dynamic parameters of the structure to be damped vary, thereby being scarcely effective for machine tools provided with moving structures, such as a ram, for example, the dynamics of which are changing according to the position of the ram.

Active dampers are able to adapt to dynamically changing means and use thereof for suppressing chatter is known, such as through Spanish patent ES2425994B1, for example. Active dampers are made up of sensors measuring vibration of the structure and actuators which allow introducing a force by means of electromagnetic, piezoelectric, inertial, or hydraulic systems, among others.

Due to their size, integration of active dampers of this type in structures of machines, for example in a ram, is complicated. Internally housing an active damper inside the ram makes it necessary to open up large housings in the ram, which entails reducing itsrigidity, or increasing the general dimensions of the ram, which entails an increase in cost and a redesign of the machine. Active dampers therefore tend to be arranged in the outer portion of the ram, see for example United States patent US6296093B1; however, with this arrangement, the possibilities of interference between the ram and the part during machining increase.

European patent application number EP14380034.0, belonging to the same applicant as the present invention and filed on July 5, 2014, discloses a machine tool with a cantilever-type ram incorporating two active one-way dampers located at the end of the ram closest to the cutting tool, and integrated on two contiguous side faces of the ram, and where each active damper is particularly suitable for generating a force parallel to the surface of the side face of the ram on which it is arranged, thereby attenuating the main vibration modes of the ram caused by chatter. Since the actuators are integrated in the ram, oversizing the ram is prevented, and therefore interferences between the ram and the part during machining are prevented from occurring. In any case, this solution makes it necessary to generate a space in the ram for housing the dampers, as well as the actual use of dampers, which raises the total cost of the machine.

A system for suppressing chatter for machine tools with cantilever-type elements, such as the ram, preventing the need to use active dampers is therefore necessary.

Along this line, use of the actual drives of the machine tool for suppressing chatter is known. United States patent US6889436B2 proposes using the drive of the machine when it has a linear motor to generate travel between the two main portions of the linear motor, perpendicular to the conventional advance direction of the motor, to suppress chatter. German patent DE102013202408A1 proposes a filter parameterization method to prevent chatter.

### Object of the Invention

The present invention proposes a system for suppressing self-induced structural vibrations, known as chatter, which affect the ram of machine tools, such as milling machines, boring machines, vertical lathes, or machining centers.

During the machining process, when the tool comes into contact with the part self-induced structural vibrations occur which affect the ram of the machine tool, causing it to vibrate according to a horizontal direction on the "x"-axis, and according to a vertical direction on the "y"-axis, the cutting process therefore becoming unstable.

To prevent this problem that affects the working dynamics of the machine tool the invention proposes a system comprising:
- a first drive configured for moving the ram in the horizontal direction of the "x"-axis,
- a second drive configured for moving the ram in the vertical direction of the "y"-axis,
- a first movement detection means configured for detecting vibration of the ram in the horizontal direction of the "x"-axis,
- a second movement detection means configured for detecting vibration of the ram in the vertical direction of the "y"-axis,
- control means configured for commanding the first drive and generating a movement according to the vibration of the ram in the horizontal direction of the "x"-axis, and configured for commanding the second drive and generating a movement according to the vibration of the ram in the vertical direction of the "y"-axis.

The actual drives of the machine tool which move the ram according to vibrations occurring during the machining process are thereby used, suppressing chatter, whereby preventing the need to use active dampers that raise the cost of the machine tool.

It has been envisaged that the movement detection means comprise two accelerometers. The first accelerometer measures vibration of the ram in the horizontal direction of the "x"-axis, and the second accelerometer measures vibration of the ram in the vertical direction of the "y"-axis. It is particularly relevant for the accelerometers to be arranged at the end of the ram closest to the cutting tool because it is there where the focal point of vibrations causing unwanted vibration of the ram is generated.

It is also particularly relevant for the first accelerometer responsible for measuring vibration in the horizontal direction of the "x"-axis to be arranged on a side face of the ram perpendicular to said "x"-axis, and for the second accelerometer responsible for measuring vibration in the vertical direction of the "y"-axis to be arranged on a side face of the ram perpendicular to said "y"-axis. It is thereby assured that each accelerometer will have a sufficient support base on the respective side face of the ram for taking a reliable measurement.

It is also particularly relevant for each accelerometer to be located at the midpoint of the side face of the ram on which it is placed. It is thereby assured that only vibration of the ram in the direction of the "x"-axis and the "y"-axis is measured, and that other vibration modes, such as torsion of the ram, do not affect measurements of the accelerometers.

The signal measured by the accelerometers is fed to the control loops of the drives of the machine. Therefore, when the accelerometers detect vibration of the ram on one of the "x"-axis or "y"-axis, that acceleration signal is fed to the control loop of the respective drive moving the ram on those axes, and the respective drive is commanded to generate a movement according to the vibration that has occurred in the ram.

Vibrations affecting the ram occur in a low frequency range; specifically, they have a frequency between 1 and 200 Hz, so the bandwidth of the current control loop of each drive must be of a frequency equal to or greater than the vibration frequency with which the ram vibrates, such that the drive can respond to the vibration to be suppressed in a satisfactory manner.

A system for suppressing the chatter affecting the ram of a machine tool is thereby obtained, improving the dynamic response of the machine and its work capacity, and preventing the need to use active dampers.

### Description of the Drawings

Figure 1 shows a perspective view of a milling machine-type machine tool with the system for suppressing chatter of the present invention.
Figure 2 shows a schematic section view of the preceding figure.
Figure 3 shows a graphical depiction of the vibration of the ram occurring due to the effect of chatter on the "y"-axis.
Figure 4 shows a graphical depiction of the oscillation of the ram occurring due to the effect of chatter on the "x"-axis.
Figure 5 shows a graphical depiction of the torsional and bending movements to which the ram is subjected due to the effect of chatter on the "x"-axis.
Figure 6 shows a front view of the ram where the accelerometers for measuring the effect of chatter on the "x"-axis and "y"-axis are located.
Figure 7 shows an example of a control diagram of one of the drives causing movement of the ram on one of the "x"-axis and "y"-axis, where a measured acceleration signal is added to the speed loop of the drive.
Figure 8 shows a model of the machine tool by means of three masses with two vibration modes which allows demonstrating the push-pull mode destabilization problem.
Figure 9 shows a graph of the root locus of the speed loop of the control diagram in which it can be seen how one mode is damped whereas the second mode is destabilized.
Figure 10 shows a graph of a frequency response function illustrating the push-pull mode destabilization problem.
Figure 11 shows another embodiment of the control diagram of a drive, where the measured acceleration signal is added to the current control loop of the drive.
Figure 12 shows another embodiment of the control diagram of a drive, where one or more acceleration signals are added to the current control loop of the drive.
Figure 13 shows another embodiment of the control diagram of a drive, where one or more acceleration signals are added to the speed control loop of the drive and one or more acceleration signals are added to the current control loop of the drive.
Figure 14 shows another embodiment of the control diagram of a drive, where one or more acceleration signals are added to the speed control loop of the drive.
Figures 15 and 16 show comparative graphs of the improvement obtained when the system for suppressing chatter proposed by the invention is used.

### Detailed Description of the Invention

Those skilled in the art will understand the object of the present invention by means of reading the detailed description of the embodiments described below, said description and the drawings being merely illustrative and in no case limiting.

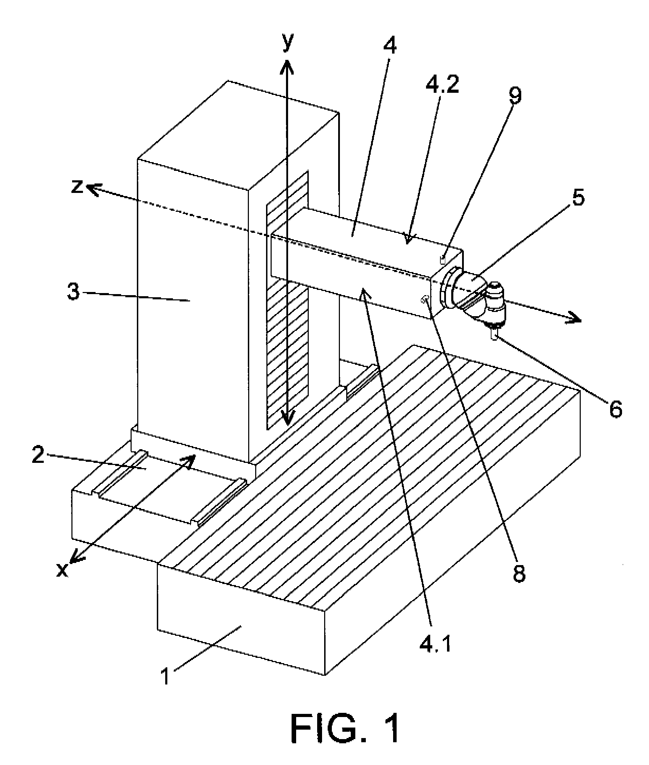

Figure 1 shows a milling machine-type machine tool which comprises a workbench (1) on which the part to be machined is arranged, a base (2) on which a column (3) is supported, and a ram (4) which is mounted in the column (3) and which, at the end thereof, incorporates a machining head (5) where the cutting tool (6) for machining the part is located.

The column (3) carrying the ram (4) is susceptible to being moved with respect to the workbench (1) according to a horizontal direction on the axis (x), whereas the ram (4) in turn is susceptible to being moved with respect to the column (3) according to a vertical direction on the axis (y), and according to another horizontal direction on the axis (z).

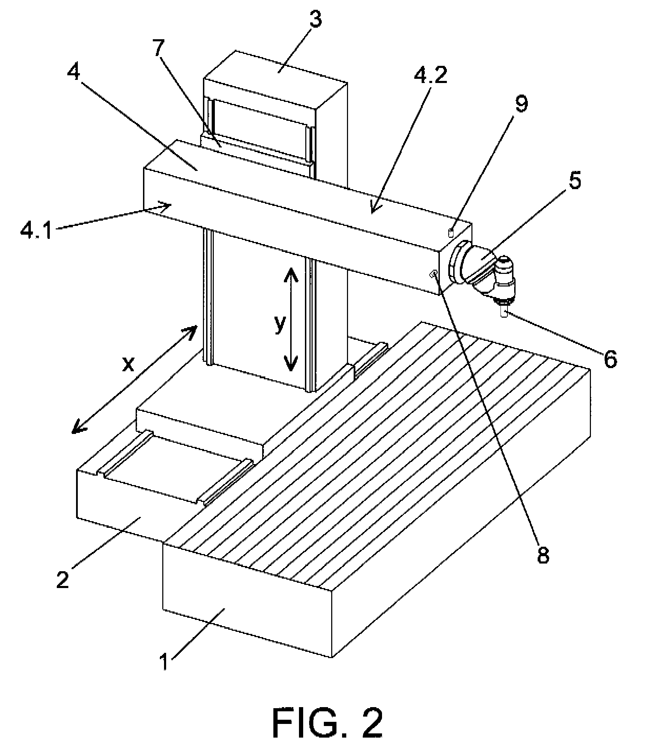

As can be seen in the schematic section view of Figure 2, the ram (4) is mounted in a traveling carriage (7) which allows it to move with respect to the column (3) in the vertical direction of the axis (y) and in the horizontal direction of the axis (z). The movement of the column (3) on the axis (x), and the movement of the ram on the axes (y) and (z) are obtained by means of independent drives. The ram (4) can therefore be located in any spatial position by means of the interpolation of movements on the three axes (x, y, z).

By way of non-limiting example, movement of the column (3) in the horizontal direction of the axis (x) can be obtained by means of a first drive consisting of a servomotor driving a rack and pinion mechanism, and movement of the ram (4) with respect to the column (3) in the vertical direction of the axis (y) can be obtained by means of a second drive consisting of another servomotor driving a ball screw.

The ram (4) is an oblong element (longer than it is wide) which is arranged in cantilever fashion with respect to the column (3); therefore, and due to its inertia and flexibility, it is the portion of the machine that has the most influence on the dynamic response thereof, such that the machining process behaves very differently according to the spatial position in which the ram (4) is located with respect to the column (3).

It has experimentally been found that critical vibration modes of the ram (4) correspond with its bending modes, such that when the working tool (6) machines a part, due to the cutting forces, the ram (4) tends to vibrate mainly in two main bending directions on the axes (x) and (y).

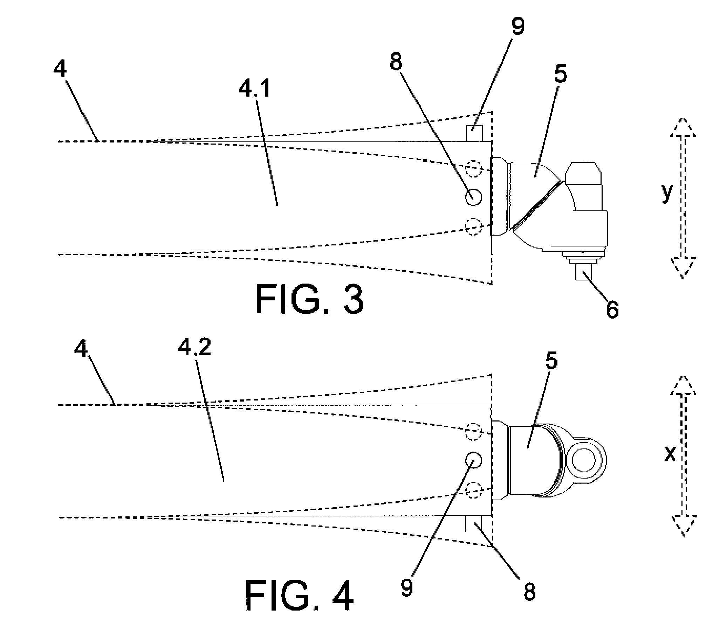

For better understanding, Figures 3 and 4 depict in an accentuated manner vibration of the ram in its two main bending directions. Vibration of the ram (4) in the vertical direction of the axis (y) is represented in Figure 3 by means of a dashed line, whereas vibration of the ram (4) in the direction of the horizontal axis (x) is represented in Figure 4, also by means of a dashed line. Therefore, to suppress chatter occurring in the ram (4), it is particularly relevant to apply movements that are aligned with the main bending directions in which the ram (4) oscillates on the axes (x) and (y).

The present invention therefore proposes using the actual drives moving the ram (4) on the axes (x) and (y) to cause movements in the direction substantially opposite to the main bending directions in which the ram (4) vibrates. The actual drives of the machine thereby generate a force transmitting to the ram (4) movements that suppress vibrations occurring in the ram (4) during machining.

Movement detection means are used to enable detecting the occurrence and the magnitude of vibrations affecting the ram (4) in the direction of the axes (x) and (y). It has been envisaged that the movement detection means are a first accelerometer (8) configured for detecting vibration of the ram (4) in the horizontal direction of the axis (x), and a second accelerometer (9) configured for detecting vibration of the ram (4) in the vertical direction of the axis (y). However, other means for detecting movement, such as optical sensors or position transducers, could be used.

To take a suitable vibration measurement, accelerometers (8 and 9) are arranged at the end of the ram (4) closest to the cutting tool (6), since it is in the contact between the cutting tool (6) and the part that is being machined where the focal point of the vibrations transmitted to the ram (4) is generated.

As seen in Figures 3, 4, and 6, it has been envisaged that the first accelerometer (8) is arranged on a first side face (4.1) of the ram (4) parallel to the axis (y), and that the second accelerometer (8) is arranged on a second side face (4.2) of the ram (4) parallel to the axis (x) and contiguous to the first side face (4.1) of the ram (4). In any case, accelerometers (8) and (9) can be arranged on any of the four side faces (4.1, 4.2, 4.3, 4.4) of the ram (4); nevertheless, each accelerometer (8, 9) is preferably arranged on a side face of the ram (4) that is perpendicular to the direction of the vibration to be measured. Therefore, the first accelerometer (8) can be located in the first side face (4.1) or third side face (4.3) of the ram which are perpendicular to the axis (x), and the second accelerometer (9) can be located on the second side face (4.2) or fourth side face (4.4) of the ram (4) which are perpendicular to the axis (y).

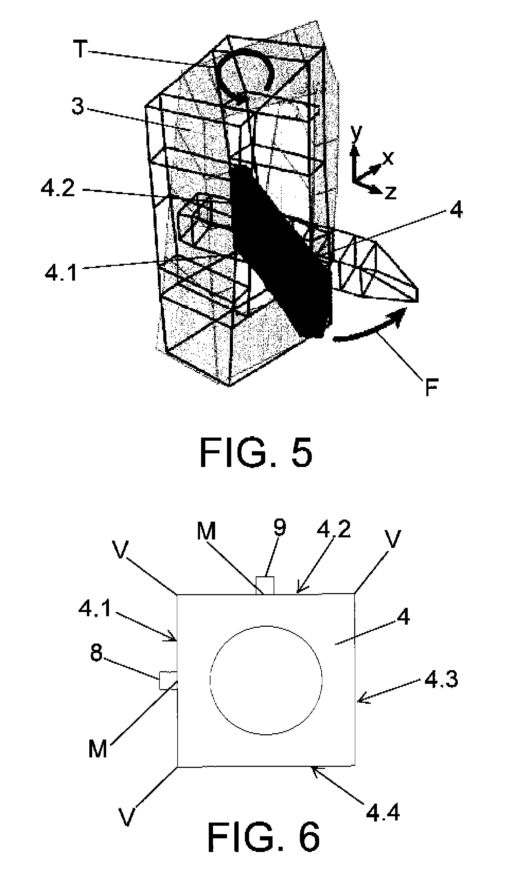

Figure 5 shows the ram (4) of a milling machine-type machine tool subjected to the effect of chatter occurring in the critical vibration mode in the direction of the axis (x). A bending movement (F) of the ram (4) thus occurs in the plane (x-z) and a torsional movement (T) of the column (3) occurs, generating a rotation mode of the ram (4) about its longitudinal axis which negatively affects the measurement of the accelerometers (8, 9), and it is particularly pronounced in the vertices (v) of attachment of the side faces of the ram (4) (see Figure 6). Furthermore, the accelerometers (8, 9) are not collocated with the drives of the machine, i.e., the point where the measurement of vibration is taken is different from the point where the damping movement for suppressing it is generated; it is therefore advisable to prevent the critical vibration mode associated with the rotational movement of the ram (4) about its longitudinal axis. It has therefore been envisaged that each accelerometer (8, 9) is placed at the midpoint (M) of the respective side face (4.1, 4.2) of the ram (4) to be located at a nodal point of rotation, and at the end of the ram (4) closest to the cutting tool (6).

In some machine tool types, the head (5) is fixed to the ram (4) such that orientation of the head (5) does not change with respect to the axes (x), (y) and (z); therefore, in the sense of the present invention, for machines of this type in which the head (5) is integral with the ram (4), the head (5) is considered to be an extension of the ram (4) in relation to the indications of the preceding points about the location of the accelerometers (8, 9) on the axes (x) and (y).

Each drive of the machine tool is known to be controlled by a series of control loops receiving from the computer numerical control (CNC) of the machine a setpoint value with the theoretical position (Xs) that the drive must have at all times of machining according to the part-program that is being run in the CNC of the machine, and that theoretical value is compared with the real position value (Xm) that the drive has in real time to assure correct operation of the drive during machining.

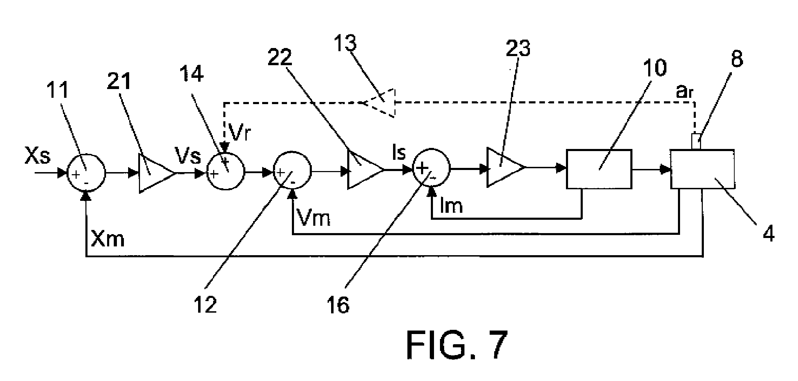

Figure 7 shows an example of a control diagram of the servomotor (10) causing movement of the ram (4) on the axis (x). The control diagram of the servomotor causing movement of the ram (4) on the axis (y) would be identical and therefore is not herein described. The real position value (Xm) and the real speed value (Vm) of the ram (4) driven by the servomotor (10) are measured by sensors of the actual machine and are fed in real time to an addition point (11) of the position control loop and to an addition point (12) of the speed control loop. The setpoint value of the theoretical position (Xs) sent by the CNC to the position control loop is compared with the real position value (Xm) and the difference thereof is multiplied by a position controller (21), obtaining the speed setpoint (Vs) of the speed loop. The speed setpoint (Vs) calculated as output of the position loop is compared with the measured real speed (Vm) and the difference thereof is multiplied by a speed controller (22), giving as a result the current setpoint (Is). This current setpoint (Is) is compared with the real current (Im) measured in the servomotor (10) and the difference thereof is multiplied by a current controller (23), which applies the necessary voltage to the servomotor (10) so that the difference between the current setpoint (Is) and the real current (Im) measured is as small as possible. The real current (Im) of the servomotor (10) relates to the force which the servomotor (10) itself generates and which is transmitted to the ram (4) generating a movement.

Therefore, as can be seen by means of a dashed line in the embodiment of Figure 7, an additional closed loop which feeds the value of the acceleration (ar) measured by the first accelerometer (8) to the point of speed setpoint (Vs) of the speed control loop of the servomotor (10) is incorporated in the control diagram of the servomotor (10). The acceleration (ar) measured by the first accelerometer (8) is therefore multiplied by a chatter suppression controller (13) obtaining a feedback speed (Vr) which is added to the real speed value (Vm) at the addition point (14) of the speed control loop of the servomotor (10). The servomotor (10) is thereby caused to perform a movement in the direction opposite to the vibration of the ram (4) in the horizontal direction of the axis (x) measured by the first accelerometer (8), the vibration in said axis (x) therefore being suppressed by means of the actual servomotor (10).

The chatter suppression controller (13) can be a proportional-integral-derivative controller, and can comprise low-pass filters, high-pass filters, notch filters, resonance filters, or lead-lag filters. Sliding mode control (SMC), predictive control, learning control, or gain scheduling techniques can also be used. The output of the chatter suppression controller (13) that is added to the addition point (14) of the control loop of the servomotor (10) does not necessarily have to be a speed value.

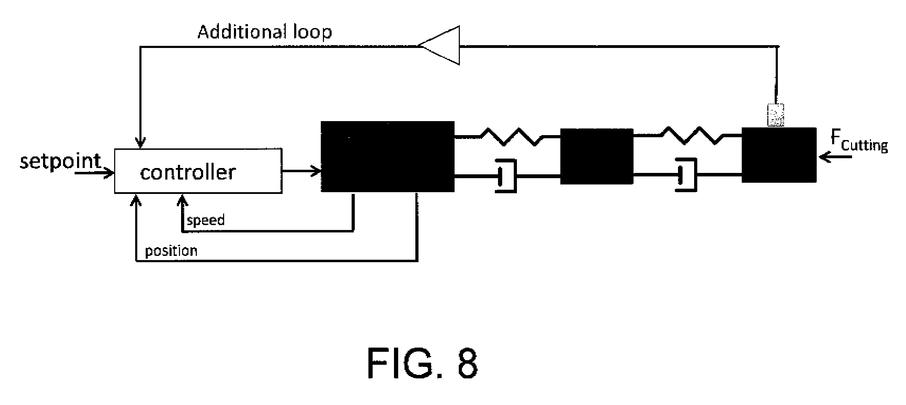

In the proposed invention, the additional closed loop that feeds the value of the measured acceleration (ar) is a non-collocated control loop. Destabilization of the structural modes of the machine tool is a problem relating to the non-collocated control strategy. This non-collocation problem is depicted in the model of Figure 8 with two structural vibration modes.

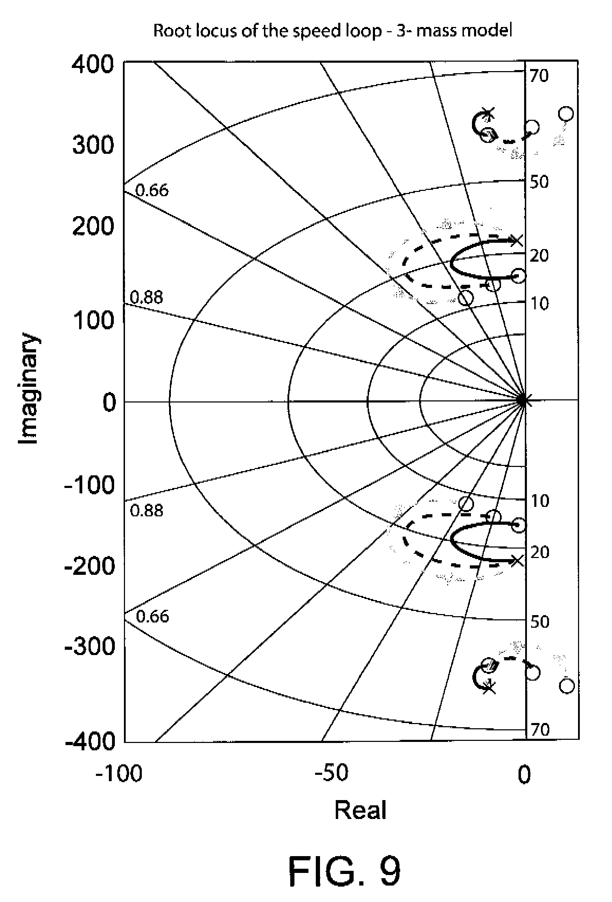

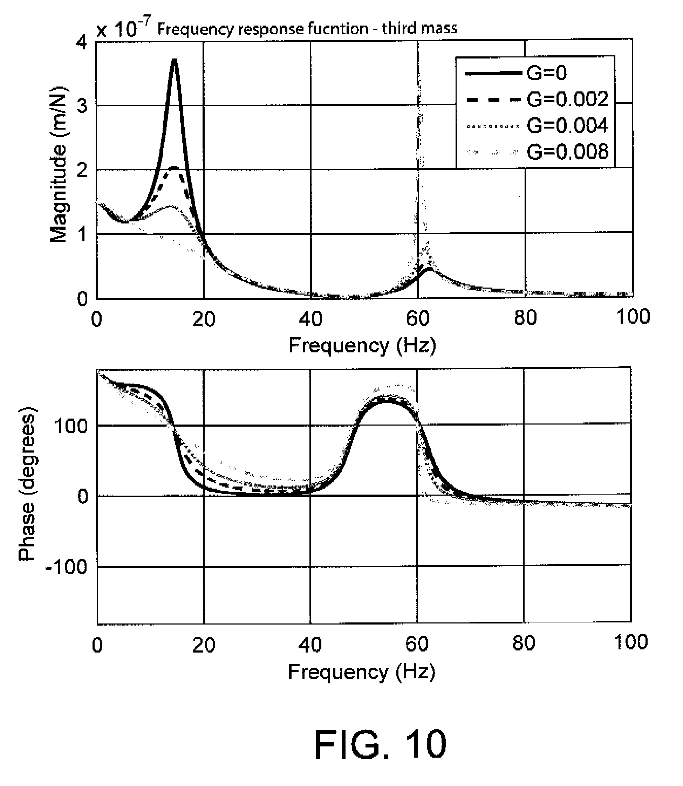

The root locus of the speed loop of Figure 9 and with respect to the frequency response function obtained in the third mass of Figure 10, it can be seen that the first mode of 15 Hz can be attenuated upon increasing the gain "G" of the controller (13), but the second mode at 60 Hz is amplified by the additional closed loop. This behavior is due to the fact that both modes are vibrating in a push-pull mode. This is a situation commonly occurs in machine tools. In fact, it is common to have a push-pull mode having a shape similar to the mode which is to be suppressed and having a natural frequency close to the mode to be suppressed.

This problem can be solved in the following manners:
- Tuning the chatter suppression controller (13) by means of gain and phase adjustment thereof. Gain can be selectively increased in a specific frequency range. Phase can be adjusted for each frequency. However, it is important to take into account that the dynamics in the work space are changing, so the chatter suppression controller (13) must be robust.
- Suitably locating the accelerometers (8, 9) measuring vibration by positioning them on vibration nodes. By doing that, it is possible to reduce the effect of the push-pull modes.
- Combining several vibration measurement points. Therefore, instead of using a single measurement for detecting vibration of the ram (4) on one of the axes, it is possible to combine two or more measurements; for example, mode destabilization can be prevented by combining acceleration of the tip of the ram (4) and acceleration of the column (3) of the machine.

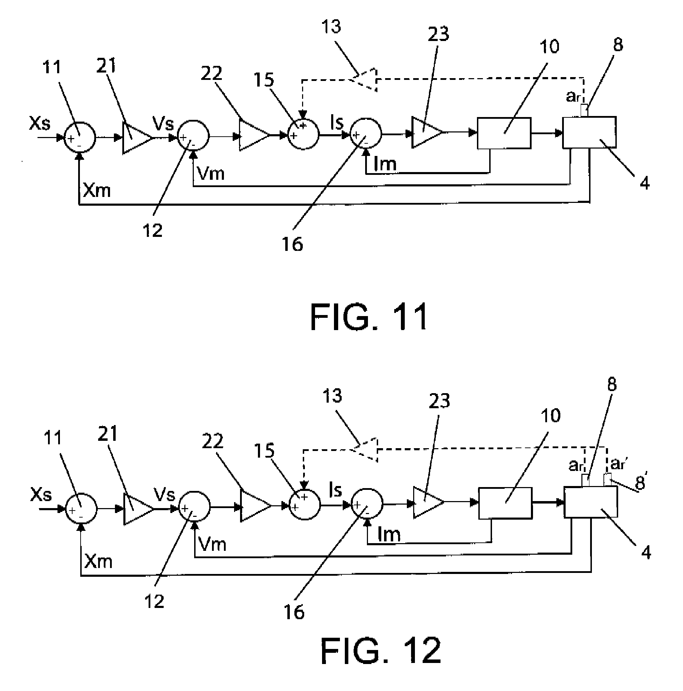

Figures 11 to 14 show other embodiments of the control diagram of the servomotor (10) causing movement of the ram (4) on the axis (x). As previously indicated, the control diagram of the servomotor (10) causing movement of the ram (4) on the axis (y) would be identical, and therefore is not herein described.

Figure 11 shows another embodiment of the control diagram of the servomotor (10) causing movement of the ram (4) on the axis (x), where acceleration (ar) measured by the first accelerometer (8) is fed to the current control loop of the servomotor (10) at the addition point (15).

Figure 12 shows another embodiment of the control diagram of the servomotor (10) causing movement of the ram (4) on the axis (x), where besides the acceleration (ar) measured by the first accelerometer (8), one or more additional acceleration signals (ar') are added to the addition point (15) of the current control loop of the servomotor (10). In this case, more than one acceleration signal representative of the vibration of the ram (4) on the axis (x) is sent to the chatter suppression controller (13). For example, in the case of the control diagram of the servomotor (10) causing movement of the ram (4) on the axis (x), the value of the acceleration (ar) measured by the first accelerometer (8) which is located on a side face (4.1, 4.3) of the ram (4) perpendicular to the axis (x), and another additional acceleration (ar') measured in the column (3) of the machine tool traveling along the axis (x) are sent to the chatter suppression controller (13).

It has been envisaged that the additional acceleration signals (ar') representative of the vibration of the ram (4) on the axis (x) can be the acceleration measured by an additional accelerometer (8') at the base of the column (3) of the machine tool traveling along the axis (x), or in the upper portion of the column (3) of the machine tool traveling along the axis (x), or in the rear portion of the ram (4) at the end opposite where the first accelerometer (8) is located.

It has also been envisaged that the additional acceleration signals (ar') representative of the vibration of the ram (4) on the axis (y) can be the acceleration measured by an additional accelerometer (8') at the base of the column (3) of the machine tool traveling along the axis (x), or in the upper portion of the column (3) of the machine tool traveling along the axis (x), or in the rear portion of the ram (4) at the end opposite where the second accelerometer (9) is located.

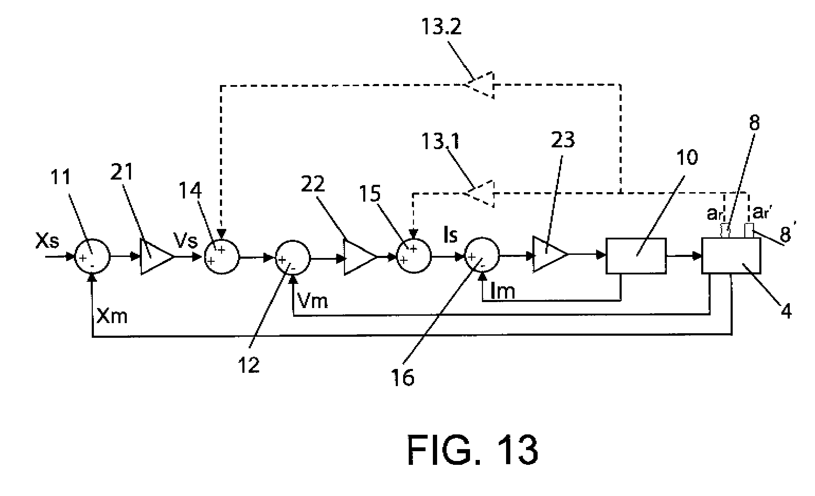

Figure 13 shows another embodiment of the control diagram of the servomotor (10) causing movement of the ram (4) on the axis (x), where acceleration (ar) measured by the first accelerometer (8) and one or more additional acceleration signals (ar') representative of the vibration of the ram (4) on the axis (x) are added to the addition point (15) of the current control loop of the servomotor (10) through a first chatter suppression controller (13.1), and furthermore, acceleration (ar) measured by the first accelerometer (8) and one or more additional acceleration signals (ar') representative of the vibration of the ram (4) on the axis (x) are also added to the addition point (14) of the speed control loop of the servomotor (10) through a second chatter suppression controller (13.2).

Therefore, the acceleration (ar) measured by the first accelerometer (8) and an additional acceleration signal (ar'), such as, for example, additional acceleration (ar') measured in the column (3) of the machine tool traveling along the axis (x), are multiplied by the first chatter suppression controller (13.1) and are added to the addition point (15) of the current control loop of the servomotor (10), whereas the acceleration (ar) measured by the first accelerometer (8) and the additional acceleration signal (ar') measured in the column (3) are multiplied by the second chatter suppression controller (13.2) and are added to the addition point (14) of the speed control loop of the servomotor (10). The additional acceleration signals (ar') representative of the vibration of the ram (4) on the axes (x) and (y) are the same as those previously indicated in the description of Figure 12.

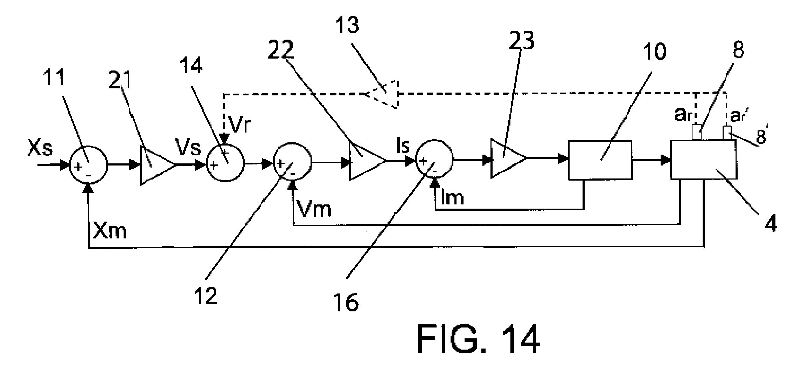

Figure 14 shows another embodiment of the control diagram of the servomotor (10) causing movement of the ram (4) on the axis (x), where the acceleration (ar) measured by the first accelerometer (8) and one or more additional acceleration signals (ar') representative of the vibration of the ram (4) on the axis (x) are added to the addition point (14) of the speed control loop of the servomotor (10) through the chatter suppression controller (13). Therefore, the acceleration (ar) measured by the first accelerometer (8), and an additional acceleration signal (ar'), such as, for example, the additional acceleration (ar') measured in the column (3), are multiplied by the chatter suppression controller (13) and are added to the addition point (14) of the speed control loop of the servomotor (10).

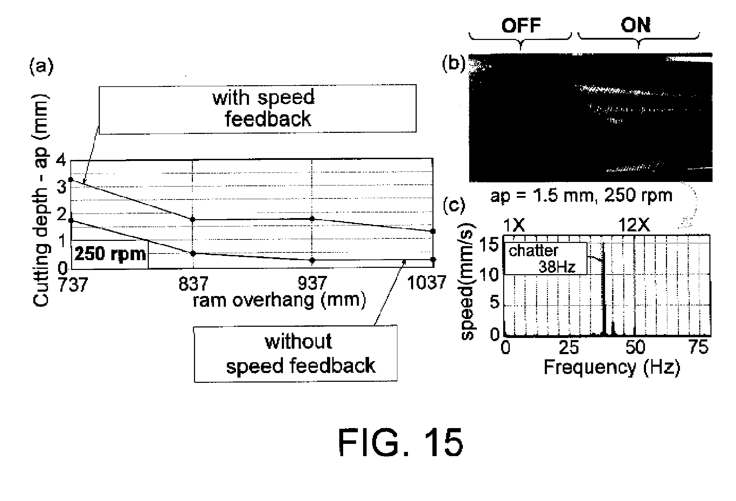

Figure 15 shows an example of the effect the system of the present invention produces on a milling machine provided with a ram (4) such as that depicted in Figures 1 and 2. Specifically, Figure 15a shows a graph where the cutting depth of the tool (6) as the ram (4) travels with respect to the column (3) of the machine is shown. The cutting depth is thereby improved by at least 1 mm when the additional closed loop feeding the value of the acceleration is activated. Figure 15b also shows a part the left portion of which has been machined when the additional closed loop is not activated, and the right part of which has been machined when the loop is activated. Figure 15c shows the occurrence of chatter at the frequency of 38 Hz when the loop is deactivated.

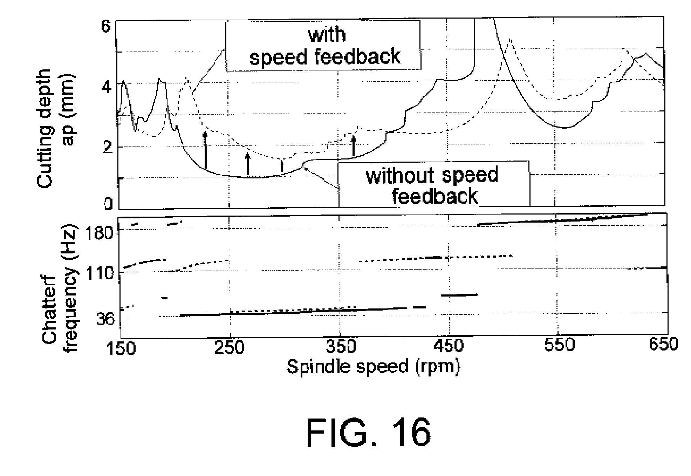

Figure 16 shows how minimum stability can be increased by means of the present invention, showing a graph of the cutting depth and a graph of the chatter frequency of a comparison, with the additional closed loop being activated (depicted in a dashed line) and not activated (depicted in a solid black line).

The invention has been described for the case of the ram (4) of a milling machine-type machine tool, although it could be applied to machine tools of another type provided with a ram, such as a vertical lathe, a boring machine, or a machining center, for example.

## Claims

1. A system for suppressing chatterin a machine tool, occurring in the ram (4) of the machine toolduring machining, according to a horizontal directionon an axis (x), and according to a vertical directionon an axis (y), **characterized in that** the system comprises:
- a first drive configured for moving the ram (4) in the horizontal direction of the axis (x),
- a second drive configured for moving the ram (4) in the vertical direction of the axis(y),
- a first movement detection means configured for measuring vibration of the ram (4) in the horizontal direction of the axis (x),
- a second movement detection means configured for measuring vibration of theram (4) inthevertical directionof theaxis(y),
- control meansconfiguredfor commanding the first drive and generatingamovementaccording to the vibrationof theram (4) inthehorizontal directionof theaxis (x), andconfiguredfor commanding the secondd rive and generatingamovementaccording to the vibrationof theram (4) inthevertical directionof the axis(y).

2. The system for suppressing chatter in a machine tool according to claim 1, **characterized in that** the control meanscommand the first drive to generateamovement in the direction opposite to the vibrationof theram (4) inthehorizontal directionof theaxis (x), andcommandtheseconddrive to generateamovement in the direction opposite to the vibrationof theram (4) inthevertical directionof theaxis(y).

3. The system for suppressing chatter in a machine tool according to claim 1, **characterized in that** the movement detection means comprise a first accelerometer (8) measuring vibrationof theram (4) inthehorizontal directionof theaxis (x), andasecondaccelerometer (9) measuring vibrationof theram (4) inthevertical directionof theaxis(y).

4. The system for suppressing chatter in a machine tool according to the preceding claim, **characterized in that** the first and second accelerometers (8, 9) are arranged at the endof theram (4) closest to the cutting tool (6), and at the midpoint (M) of a respective side face (4.1, 4.2, 4.3, 4.4) of theram (4).

5. The system for suppressing chatter in a machine tool according to the preceding claim, **characterized in that** the first accelerometer (8) is arranged on a side face (4.1, 4.3) of theram (4)perpendicular to the axis (x), and the second accelerometer (9) is arranged on a side face (4.2, 4.4) of theram (4) perpendicular to the axis(y).

6. The system for suppressing chatter in a machine tool according to claim 1, **characterized in that** the first and second drives have acurrent control loop bandwidth with a frequency greater than or equal to 200 Hz.

7. The system for suppressing chatter in a machine tool according to claim 1, **characterized in that** the control means commanding the first and second drives comprise, for each drive, at least one chatter suppression controller (13) multiplyingat least one acceleration signalofthe vibrationof theram (4) on one of the axes (x) or(y)for adding it to at least one control loopof the drive.

8. The system for suppressing chatter in a machine tool according to the preceding claim, **characterized in that** the acceleration signal of the vibration of the ram (4) on one of the axes (x) or (y) is added to an addition point (14) of a speed control loop of the drive.

9. The system for suppressing chatter in a machine tool according to the preceding claim, **characterized in that** one or more additional acceleration signals (ar') representative of the vibration of the ram (4) are added to the addition point (14) of the speed control loop of the drive.

10. The system for suppressing chatter in a machine tool according to claim 7, **characterized in that** the acceleration signal of the vibration of the ram (4) on one of the axes (x) or (y) is added to an addition point (15) of a current control loop of the drive.

11. The system for suppressing chatter in a machine tool according to the preceding claim, **characterized in that** one or more additional acceleration signals (ar') representative of the vibration of the ram (4) are added to the addition point (15) of the current control loop of the drive.

12. The system for suppressing chatter in a machine tool according to claim 7, **characterized in that** the control means commanding the first and second drives comprise, for each drive, a first chatter suppression controller (13.1) multiplying the acceleration signal of the vibration of the ram (4) on one of the axes (x) or (y) for adding it to an addition point (14) of a speed control loop of the drive, and a second chatter suppression controller (13.2) multiplying the acceleration signal of the vibration of the ram (4) on one of the axes (x) or (y) for adding it to an addition point (15) of a current control loop of the drive.

13. The system for suppressing chatter in a machine tool according to the preceding claim, **characterized in that** one or more additional acceleration signals (ar') representative of the vibration of the ram (4) are added to the addition point (14) of the speed control loop of the drive and to the addition point (15) of the current control loop of the drive.
